# NEUE EUROPÄISCHE PATENTSCHRIFT

(11) **EP 0 697 424 B2**
(45) Veröffentlichungstag und Bekanntmachung des Hinweises auf die Entscheidung über den Einspruch: **03.07.2002**
(45) Hinweis auf die Patenterteilung: 09.12.1998
(21) Anmeldenummer: 95112671.3
(22) Anmeldetag: 11.08.1995
(51) Int. Cl.: C08G 18/70, C08G 18/08

(54) **Mischungen, enthaltend wasseremulgierende Isocyanate**
Blends containing water-emulsifiable isocyanates
Mélanges contenant des isocyanates émulsionnables dans l'eau

(30) Priorität: 19.08.1994 DE 4429446
(43) Veröffentlichungstag der Anmeldung: 21.02.1996
(73) Patentinhaber: BASF AKTIENGESELLSCHAFT, 67056 Ludwigshafen (DE)
(72) Erfinder: Weyland, Peter, Dr., D-67227 Frankenthal (DE); Treiber, Reinhard, D-69181 Leimen (DE); Sturm, Alwin, D-67071 Ludwigshafen (DE); Seibert, Horst, D-67136 Fussgönheim (DE); Renz, Hans, Dr., D-67149 Meckenheim (DE); Reichert, Jürgen, Dr., D-67059 Ludwigshafen (DE); Häberle, Karl, Dr., D-67346 Speyer (DE)

(56) Entgegenhaltungen:
- EP-A- 0 206 059
- EP-A- 0 294 984
- EP-A- 0 310 345
- EP-A1- 0 007 195
- DE-A- 3 831 169

## Beschreibung

Die Erfindung betrifft eine Mischung, enthaltend
a) wasseremulgierbare Polyisocyanate und
b) Kohlensäureester oder Lactone als organische Lösungsmittel.

Des weiteren betrifft die Erfindung wäßrige Dispersionen, welche die Mischungen enthalten sowie die Verwendung der Mischungen als Zusatzmittel für Klebstoffe, Beschichtungs- und Imprägnierungsmittel.

Wasseremulgierbare Polyisocyanate werden wäßrigen Polymerdispersionen als Vernetzungsmittel zugesetzt. Die Wasseremulgierbarkeit ist eine Folge der hydrophilen Modifizierung der Polyisocyanate. Aus der DE-A-35 21 618 sind entsprechende Polyisocyanate bekannt, die Polyethergruppen enthalten und so wasseremulgierbar sind. Zur Verringerung der Viskosität können den Polyisocyanaten organische Lösungsmittel zugesetzt werden. In der DE-A-35 21 618 werden z.B. Ethylacetat, Aceton und Methylethylketon als Lösungsmittel genannt.

Die wasseremulgierbaren Polyisocyanate sollen sich möglichst feinteilig in Polymerdispersionen dispergieren lassen, damit die erhaltenen Dispersionen eine hohe Lagerstabilität haben. Gleichzeitig sollen die gewünschten Eigenschaftsverbesserungen der Polymerdispersion durch möglichst geringen Zusatz der wasseremulgierbaren Polyisocyanate erreicht werden.

Aufgabe der vorliegenden Erfindung waren daher wasseremulgierbare Polyisocyanate, welche die vorstehenden Vorteile bieten.

Demgemäß wurden die oben definierten Mischungen sowie ihre Verwendung als Zusatzmittel für wäßrige Polymerdispersionen gefunden.

Bei den wasseremulgierbaren Polyisocyanaten handelt es sich um (cyclo)aliphatische oder aromatische Diisocyanate oder höherfunktionelle Polyisocyanate, welche zum Teil mit Verbindungen mit mindestens einer hydrophilen Gruppe und mit mindestens einer gegenüber Isocyanat reaktiven Gruppen umgesetzt sind.

Als Polyisocyanate kommen z.B. geradlinige oder verzweigte C₄-C₁₄-Alkylendiisocyanate, cycloaliphatische Diisocyanate mit insgesamt 6 bis 12 C-Atomen, aromatische Diisocyanate mit insgesamt 8 bis 14 C-Atomen, Isocyanuratgruppen aufweisende Polyisocyanate, Uretdiondiisocyanate, Biuretgruppen aufweisende Polyisocyanate, Urethanoder Allophanatgruppen aufweisende Polyisocyanate, Oxadiazintriongruppen enthaltende Polyisocyanate, Uretonimin-modifizierte Polyisocyanate oder deren Gemische in Betracht.

Als Diisocyanate a) genannt seien z.B. Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1 -Isocyanato-3,3,5-trimethyl-5-(isocyanatomethyl)cyclohexan (Isophorondiisocyanat) oder 2,4- oder 2,6-Diisocyanato-1-methylcyclohexan oder aromatische Diisocyanate wie 2,4-Diisocyanatotoluol, 2,6-Diisocyanatotoluol, Tetramethylxylylendiisocyanat, 1,4-Diisocyanatobenzol, 4,4'- und 2,4-Diisocyanatodiphenylmethan, p-Xylylendiisocyanat, sowie Isopropenyldimethyltoluylendiisocyanat.

Als Polyisocyanate seien z.B. mehrkernige Homologe der vorstehend genannten aromatischen Diisocyanate genannt.

Bevorzugt sind aliphatische bzw. cycloaliphatische Polyisocyanate, z.B. die vorstehend genannten Diisocyanate, deren Mischungen oder
a) Isocyanuratgruppen aufweisende Polyisocyanate von aliphatischen und/odercycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Tris-isocyantocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
b) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.

Die Uretdiondiisocyanate können in den erfindungsgemäßen Zubereitungen als alleinige Komponente oder im Gemisch mit anderen Polyisocyanaten, insbesondere den unter a) genannten, eingesetzt werden.
c) Biuretgruppen aufweisende Polyisocyanate mit aliphatisch ge-bundenen Isocyanatgruppen, insbesondere Tris (6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie z.B. Trimethylolpropan, Glycerin, 1,2-Dihydroxypropan oder deren Gemischen erhalten werden können. Diese Urethan- und/ oder Allophanatgruppen aufweisenden Polyisocyanate haben im allgemeinen einen NCO-Gehalt von 12 bis 20 Gew.-% und eine mittlere NCO-Funktionalität von 2,5 bis 3.
e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
f) Uretonimin-modifizierte Polyisocyanate.

Die Polyisocyanate a) bis f) können im Gemisch, gegebenenfalls auch im Gemisch mit Diisocyanaten, eingesetzt werden.

Zur Herstellung der wasseremulgierbaren Polyisocyanate werden die oben bezeichneten Polyisocyanate umgesetzt mit Verbindungen, die mindestens eine, vorzugsweise eine hydrophile Gruppe und mindestens eine, vorzugsweise eine mit Isocyanat reaktive Gruppen, z.B. eine Hydroxy-, Mercapto- oder primäre oder sekundäre Aminogruppe (kurz NH-Gruppe) aufweisen.

Bei der hydrophilen Gruppe kann es sich z.B. um eine ionische oder in eine ionische Gruppe überführbare Gruppe handeln.

Anionische bzw. in anionische Gruppen überführbare Gruppen sind z.B. Carbonsäure- oder Sulfonsäuregruppen.

Geeignete Verbindungen sind z.B. Hydroxycarbonsäuren, wie Hydroxypivalinsäure oder Dimethylolpropionsäure oder Hydroxy- bzw. Aminsulfonsäuren.

Kationische bzw. in kationische Gruppen überführbare Gruppen sind z.B. quarternäre Ammoniumgruppen bzw. tertiäre Aminogruppen.

In ionische Gruppen überführbare Gruppen werden vorzugsweise vor oder während der Dispergierung der erfindungsgemäßen Mischung in Wasser in ionische Gruppen überführt.

Zur Überführung z.B. von Carbonsäuregruppen oder Sulfonsäuregruppen in anionische Gruppen können anorga nische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung von tertiären Aminogruppe in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben.

Der Gehalt der ionischen Gruppen bzw. in ionische Gruppen überführbare Gruppen beträgt vorzugsweise 0,1 bis 3 mol pro kg der wasseremulgierbaren Polyisocyanate.

Nichtionische Gruppen sind z.B. Polyalkylenethergruppen, insbesondere solche mit 10 bis 80 Alkylenoxideinheiten. Bevorzugt sind Polyethylenethergruppen oder Polyalkylenethergruppen, die neben anderen Alkylenoxideinheiten, z.B. Propylenoxid, mindestens 10 Ethylenoxideinheiten enthalten.

Geeignete Verbindungen sind z.B. Polyalkylenetheralkohole.

Der Gehalt der hydrophilen nichtionischen Gruppen, insbesondere der Polyalkylenethergruppen beträgt vorzugsweise 0,5 bis 20, besonders bevorzugt 1 bis 15 Gew.-%, bezogen auf die wasseremulgierbaren Polyisocyanate.

Die Herstellung der wasseremulgierbaren Polyisocyanate ist aus der DE-A-35 21 618, DE-A-40 01 783 und DE-A-42 03 510 bekannt.

Bei der Herstellung der wasseremulgierbaren Polyisocyanate können die Verbindungen mit mindestens einer hydrophilen Gruppe und mindestens einer gegenüber Isocyanat reaktiven Gruppe mit einem Teil des Polyisocyanats umgesetzt und die erhaltenen hydrophil modifizierten Polyisocyanate dann mit den übrigen Polyisocyanaten gemischt werden. Die Herstellung kann aber auch so erfolgen, daß die Verbindungen zur Gesamtmenge der Polyiscocyanate zugesetzt wird und dann die Umsetzung "in situ" durchgeführt wird.

Bevorzugte wasseremulgierbare Polyisocyanats sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Den wasseremulgierbaren Polyisocyanaten a) werden die Kohlensäureester oder Lactone b) zugesetzt, um die erfindungsgemäße Mischung zu erhalten.

Bei den Kohlensäureestern handelt es sich bevorzugt um solche der Formel 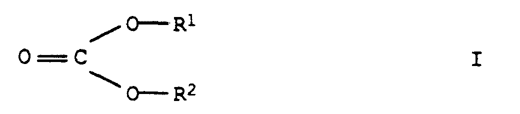 worin R¹ und R² unabhängig voneinander für einen C₁-C₆-, vorzugsweise einen C₁-C₃-Alkylrest stehen, oder R¹ und R² eine Brücke aus 2 bis 10 C-Atomen bilden. Genannt seien z.B. Dimethylcarbonat oder Diethylcarbonat.

Besonders bevorzugt handelt es sich um cyclische Kohlensäureestern,insbesondere um solche der Formel 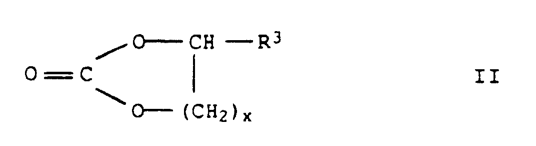 in der R³ für ein H-Atom oder eine C₁-C₅-Alkylgruppe steht und x einen Wert von 1 bis 5 haben kann.

Kohlensäureester der Formel II sind z.B. 1,2-Ethylencarbonat oder 1,2-Propylencarbonat.

Bei den Lactonen (cyclische, innere Ester von Hydroxycarbonsäuren) sind solche mit insgesamt 3 bis 10 C-Atomen bevorzugt.

Genannt seien z.B. β-Propiolacton, γ-Butyrolacton, ε-Caprolacton oder ε-Methylcaprolacton.

Die erfindungsgemäße Mischung enthält vorzugsweise 2 bis 70, besonders bevorzugt 5 bis 50 und ganz besonders bevorzugt 7 bis 40 Gew-% des Lösungsmittel b), bezogen auf die Summe aus a) + b).

Vorzugsweise besteht die erfindungsgemäße Mischung nur aus den Komponenten a) und b). Sie wird vorzugsweise in Wasser zur Herstellung wäßriger Dispersionen dispergiert.

Die erfindungsgemäßen Mischungen bzw. ihre wäßrigen Dispersionen eignen sich als solche als Beschichtungsmittel, Klebstoff oder Imprägnierungsmittel z.B. für Wollausrüstung, wie in P 4415451.8 beschrieben ist.

Die erfindungsgemäße Mischung eignet sich insbesondere als Zusatz-, d.h. Vernetzungsmittel für wäßrige Polymerdispersionen. Es kann sich bei den Polymeren z.B. um Polyurethan oder radikalisch polymerisierte Polymere handeln. Die Mischung wird den Polymerdispersionen vorzugsweise in Mengen von 0,5 bis 20, bevorzugt von 1 bis 15 Gew.-%, bezogen auf das Polymere (fest) zugesetzt.

Die wäßrigen Polymerdispersionen finden z.B. als Klebstoff, Beschichtungs- oder Imprägnierungsmittel, z.B. zum Färben, Verwendung.

Geeignete Substrate bei der Verwendung als Klebstoff oder Beschichtungsmittel (Lack, Schutzüberzüge) sind z. B. Kunststoff, Leder, Papier, Holz oder Metall.

Substrate für Imprägnierungen sind z.B. synthetische oder nicht-synthetische Fasern bzw. deren Gewebe.

Die erfindungsgemäßen Mischungen können sehr feinteilig in wäßrigen Dispersionen dispergiert werden. Die erhaltenen Dispersionen sind sehr lagerstabil. Darüber hinaus benötigt man weniger Zusatzmenge des wasseremulgierbaren Polyisocyanats um die gewünschten Eigenschaften der Dispersion einzustellen bzw. bei der Anwendung zu erreichen.

### Beispiele

### Herstellung eines nichtionisch hydrophil modifizierten Polyisocyanats (nach Beispiel 1 der EP 206 059)

1000 g eines durch Trimerisierung eines Teiles der Isocyanatgruppen von 1,6-Diisocyanatohexan hergestellten Isocyanuratgruppen aufweisenden Polyisocyanats, welches im wesentlichen aus Tris-(6-isocyanatohex)-isocyanurat und dessen höheren Homologen besteht, mit einem NCO-Gehalt von 22,2 %, einem Gehalt an monomerem Diisocyanat von weniger als 0,3 %, einer Viskosität bei 23°C von 1,9 Pas und einer mittleren NCO-Funktionalität von ca. 3,3 wurden auf 50°C erhitzt. Dazu wurden 80,8 g eines auf 50°C erhitzten monofunktionellen, auf n-Butanol gestarteten Polyethylenoxid-Polyethers mit einem Molgewicht von 1120 g/mol gegeben. Man erwärmte auf 110°C und rührte 2,5 Stunden (h).

Nach Abkühlen erhielt man ein klares Harz mit einem NCO-Gehalt von 18,9 Gew.-% und einer Viskosität bei 23°C von 2700 mPas.

### Beispiel 1

75 g des Polyisocyanats wurden mit 25 g 50°C warmem Ethylencarbonat (EC) gemischt.

### Beispiel 2

75 g des Polyisocyanats wurden mit 25 g Propylencarbonat (PC) gemischt.

### Beispiel 3

75 g des Polyisocyanats wurden mit 25 g γ-Butyrolacton (BL) gemischt.

### Beispiel 4

75 g des Polyisocyanats wurden mit 25 g Diethylcarbonat (DC) gemischt.

### Beispiel 5

75 g des Polyisocyanats wurden mit 25 g E-Caprolacton (CL) gemischt.

### Vergleichsbeispiel 1

75 g des Polyisocyanats wurden mit 25 Methoxypropylacetat (MPA) gemischt.

### Vergleichsbeispiel 2

75 g des Polyisocyanats wurden mit 25 g Butanon (Methylethylketon, MEK) gemischt.

### Vergleichsbeispiel 3

75 g des Polyisocyanats wurden mit 25 g Butylacetat (BAc) gemischt.

### Vergleichsbeispiel 4

75 g des Polyisocyanats wurden mit 25 g N-Methylpyrrolidon (NMP) gemischt.

### Vergleichsbeispiel 5

75 g des Polyisocyanats wurden mit 25 g Dimethylformamid (DMF) gemischt.

### Prüfung der Stabilität der Emulsion

Jeweils 1 g Lösung wurde mit 99 g Wasser geschüttelt, bis alles emulgiert war. Nach 24 h wurde die mittlere Teilchengröße bestimmt.

| Beispiel | Lösungsmittel | mittl. Durchmesser (nm) |
|---|---|---|
| 1 | EC | 90 |
| 2 | PC | 99 |
| 3 | BL | 104 |
| 4 | DC | 101 |
| 5 | Cl | 96 |

| Vergleichsbeispiel | | |
|---|---|---|
| 1 | MPA | 173 |
| 2 | MEK | 181 |
| 3 | BAc | 560 |
| 4 | NMP | 1432 |
| 5 | DMF | 1693 |

Der gewichtsmittlere Teilchendurchmesser wurden bestimmt durch Lichtstreumessungen mit einem Autosizer 2c der Firma Malvern.

### Anwendungsbeispiel

Baumwollgewebe mit einem Gewicht von ca. 120 g/m² wurde mit einer wäßrigen Pigmentfärbeflotte der folgenden Zusammensetzung imprägniert:

Grundrezept:
- 10 Gew.-% Pigmentrot C.I. 146
- 10 Gew.-% einer üblichen wäßrigen Polyurethandispersion als Bindemittel (Perapret® PU der Fa. BASF)
- Entschäumer, Netzmittel, Antiwalzenbelagsmittel und Antimigrationsmittel in den hierfür üblichen Mengen
- Rest Wasser (zu 100 Gew.-%).

Die Flottenaufnahme wurde durch den Abquetschdruck auf 60 Gew.-% des Gewichts der Rohware begrenzt. Anschließend wurde bei 100°C getrocknet.

Die Prüfung der Reibechtheiten der vier erhaltenen Färbungen wurde nach AATCC DIN 54 021 durchgeführt und benotet (Note 1 = sehr schlecht bis Note 5 = sehr gut).

### Beispiel A (zum Vergleich)

Zu der Färbeflotte wurden zusätzlich 3 Gew.-% des oben beschriebenen hydrophil modifizierten Isocyanats gegeben. Note 3-4.

### Beispiel B (zum Vergleich)

Zu der Färbeflotte wurden zusätzlich 3 Gew.-% einer Zubereitung aus 3 Teilen NMP und 7 Teilen des oben beschriebenen hydrophil modifizierten Isocyanats gegeben. Note 2-3.

### Beispiel C

Zu der Färbeflotte wurden zusätzlich 3 Gew.-% einer Zubereitung aus 3 Teilen Propylencarbonat und 7 Teilen des oben beschriebenen hydrophil modifizierten Isocyanats gegeben. Note 3-4.

### Beispiel D

Zu der Färbeflotte wurden zusätzlich 3 Gew.-% einer Zubereitung aus 3 Teilen Caprolacton und 7 Teilen des oben beschriebenen hydrophil modifizierten Isocyanats gegeben. Note 3-4.

Es wird ersichtlich, daß in den Beispielen C und D eine ebenso gute Färbung erzielt wird wie in Beispiel A, obwohl nur 70 % des Wirkstoffes verwendet wurden.

Wird dagegen NMP verwendet (Beispiel B), erhält man eine deutlich schlechtere Färbung.

## Patentansprüche

1. Wäßrige Polymerdispersionen erhältlich durch Zusatz einer Mischung, enthaltend
a) wasseremulgierbare Polyisocyanate und
b) Kohlensäureester oder Lactone als organische Lösungsmittel
zu wäßrigen Polymerdispersionen.

2. Wäßrige Polymerdispersionen gemäß Anspruch 1, wobei die Mischung 2 bis 70 Gew.-% der Verbindungen b), bezogen auf die Summe a) + b) enthält.

3. Wäßrige Polymerdispersion gemäß Anspruch 1 oder 2, wobei der Gehalt der ionischen Gruppen oder in ionischen Gruppen überführbaren Gruppen 0,1 bis 3 mol pro kg wasseremulgierbarer Polyisocyanate beträgt.

4. Wäßrige Polymerdispersion gemäß einem der Ansprüche 1 bis 3, wobei es sich bei den Kohlensäureestern um solche der Formel 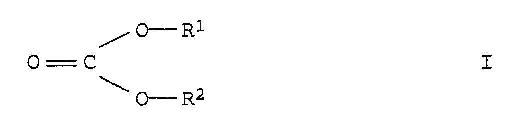 handelt, worin R¹ und R² unabhängig voneinander für einen C₁-C₆-Alkylrest stehen oder R¹ und R² zusammen eine Brücke aus 2 bis 10 C-Atomen bilden.

5. Wäßrige Polymerdispersion gemäß einem der Ansprüche 1 bis 4, wobei es sich bei den Kohlensäureestern um solche der Formel 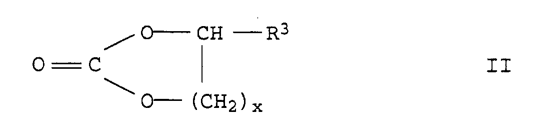 handelt, wobei R³ für ein H-Atom oder eine C₁-C₅-Alkylgruppe steht und x einen Wert von 1 bis 5 haben kann.

6. Wäßrige Polymerdispersion gemäß einem der Ansprüche 1 bis 5, wobei es sich bei den Lactonen um β-Propiolacton, γ-Butyrolacton, ε-Caprolacton, ε-Methylcaprolacton handelt.

7. Wäßrige Polymerdispersion gemäß einen der Ansprüche 1 bis 6, wobei es sich bei den Polymeren um Polyurethane oder radikalisch polymerisierte Polymere handelt.

8. Verwendung einer Mischung gemäß einen der Ansprüche 1 bis 7 als Zusatzmittel für wäßrige Polymerdispersionen.

9. Beschichtete, imprägnierte oder verklebte Substrate, erhältlich unter Verwendung einer wäßrigen Dispersion gemäß einen der Ansprüche 1 bis 7.

10. Mischung, enthaltend nur
a) wasseremulgierbare Polyisocyanate und
b) Kohlensäureester oder Lactone als organische Lösungsmittel.

## Claims

1. An aqueous polymer emulsion obtainable by addition of a mixture containing
a) water-emulsifiable polyisocyanates and
b) carbonic esters or lactones as organic solvents, to form aqueous polymer emulsions.

2. An aqueous polymer emulsion as claimed in claim 1, wherein the mixture contains from 2 to 70% by weight of the compounds b), based on the sum a) + b).

3. An aqueous polymer emulsion as claimed in claim 1 or 2, wherein the content of ionic groups or groups convertible into ionic groups is from 0.1 to 3 mol per kg of water-emulsifiable polyisocyanates.

4. An aqueous polymer emulsion as claimed in any of claims 1 to 3, wherein the carbonic esters are those of the formula 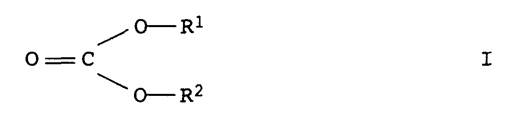 where R¹ and R² independently of one another are each C₁-C₆-alkyl or R¹ and R² together form a bridge of 2 to 10 carbon atoms.

5. An aqueous polymer emulsion as claimed in any of claims 1 to 4, wherein the carbonic esters are those of the formula 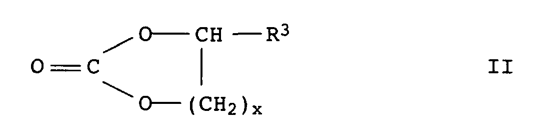 where R³ is H or C₁-C₅-alkyl and x may be from 1 to 5.

6. An aqueous polymer emulsion as claimed in any of claims 1 to 5, wherein the lactones are β-propiolactone, γ-butyrolactone, ε-caprolactone or ε-methylcaprolactone.

7. An aqueous polymer emulsion as claimed in any of claims 1 to 6, wherein the polymers are polyurethanes or polymers obtained by free radical polymerization.

8. The use of a mixture as claimed in any of claims 1 to 7 as an additive for aqueous polymer emulsions.

9. A coated, impregnated or adhesively bonded substrate, obtainable using an aqueous emulsion as claimed in any of claims 1 to 7.

10. A mixture containing
a) water-emulsifiable polyisocyanates and
b) carbonic esters or lactones as solvents.

## Revendications

1. Dispersions aqueuses de polymères pouvant être obtenues par addition, à des dispersions aqueuses de polymères, d'un mélange contenant
a) des polyisocyanates émulsionnables dans l'eau, et
b) des esters d'acide carbonique ou des lactones, en tant que solvants organiques.

2. Dispersions aqueuses de polymères selon la revendication 1, dans lesquelles le mélange contient de 2 à 70 % en poids des composés b), par rapport à la somme de a) + b).

3. Dispersion aqueuse de polymères selon la revendication 1 ou 2, dans laquelle la teneur en les groupes ioniques ou en les groupes pouvant être convertis en des groupes ioniques est de 0,1 à 3 moles par kg de polyisocyanates émulsionnables dans l'eau.

4. Dispersion aqueuse de polymères selon l'une des revendications 1 à 3, dans laquelle, pour ce qui concerne les esters de l'acide carbonique, il s'agit de ceux qui ont la formule 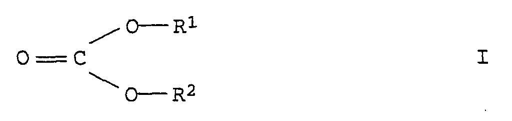 dans laquelle R¹ et R² représentent chacun indépendamment de l'autre un radical alkyle en C₁-C₆, ou encore R¹ et R² forment ensemble un pont ayant de 2 à 10 atomes de carbone.

5. Dispersion aqueuse de polymères selon l'une des revendications 1 à 4, dans laquelle, pour ce qui concerne les esters de l'acide carbonique, il s'agit de ceux qui ont la formule 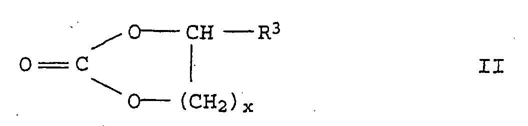 dans laquelle R³ est un atome d'hydrogène ou un groupe alkyle en C₁-C₅, et x peut valoir de 1 à 5.

6. Dispersion aqueuse de polymères selon l'une des revendications 1 à 5, dans laquelle, pour ce qui concerne les lactones, il s'agit de la β-propiolactone, de la γ-butyrolactone, de l'ε-caprolactone, de l'ε-méthylcaprolactone.

7. Dispersion aqueuse de polymères selon l'une des revendications 1 à 6, dans laquelle, pour ce qui concerne les polymères, il s'agit de polyuréthannes ou de polymères polymérisés par voie radicalaire.

8. Utilisation d'un mélange selon l'une des revendications 1 à 7 en tant qu'additif à des dispersions aqueuses de polymères.

9. Substrats revêtus, imprégnés ou collés, pouvant être obtenus par utilisation d'une dispersion aqueuse selon l'une des revendications 1 à 7.

10. Mélange ne contenant que
a) des polyisocyanates émulsionnables dans l'eau, et
b) des esters de l'acide carbonique ou des lactones, en tant que solvants organiques.
